# DEMANDE DE BREVET EUROPEEN

(11) **EP 1 398 622 A1**
(43) Date de publication de la demande: **17.03.2004**
(21) Numéro de dépôt: 02292162.1
(22) Date de dépôt: 03.09.2002
(51) Int. Cl.: G01N 21/956

(54) **Méthode d'éclairage**

(71) Demandeur: SCHLUMBERGER Systèmes, 92120 Montrouge (FR)
(72) Inventeur: Gonzalez, Maria, c/o Schlumberger Systèmes, 92542 Montrouge Cédex (FR); Chardon, Joseph, c/o Schlumberger Systèmes, 92542 Montrouge Cédex (FR); Roussel, François, c/o Schlumberger Systèmes, 92542 Montrouge Cédex (FR)

(57) **Abrégé**

Une méthode d'éclairage est proposée pour capturer et traiter des images d'une scène comprenant un support partiellement opaque aant une première face sur laquelle sont disposés des éléments opaques et une deuxième face (des bandes modules se pastilles utilisées dans l'atelier micromodule, par ex.), les images étant capturées au moyen d'un dispositif de capture d'images comprenant un axe optique, la première face recevant des rayons lumineux sensiblement perpendiculaires au plan de la scène et le dispositif de capture d'images recevant des rayons lumineux sensiblement parallèles à l'axe optique (éclairage ACIS, par ex.). Le support partiellement opaque peut être muni en outre, d'une part et d'autre des éléments opaques, de trous traversants (trous d'indexage, par ex.) et être éclairé par la deuxième face essentiellement au niveau des trous (au moyen de LEDs, tubes fluorescents ou blacklight masqué, par ex.).

## Description

### Objectifs:

Nous avons un processus de fabrication 'low cost' dans l'atelier micromodule qui permet :
- la découpe de la pastille
- l'enrobage
- la dépose pastille

Avec ce processus, nous observons parfois des débordements résine qui entraînent de nombreux rejets. L'objectif est donc de mettre en place un système de contrôle par vision qui permette la détection du débordement résine sur l'ensemble des bandes modules super 35.

### Problématique pour la détection :

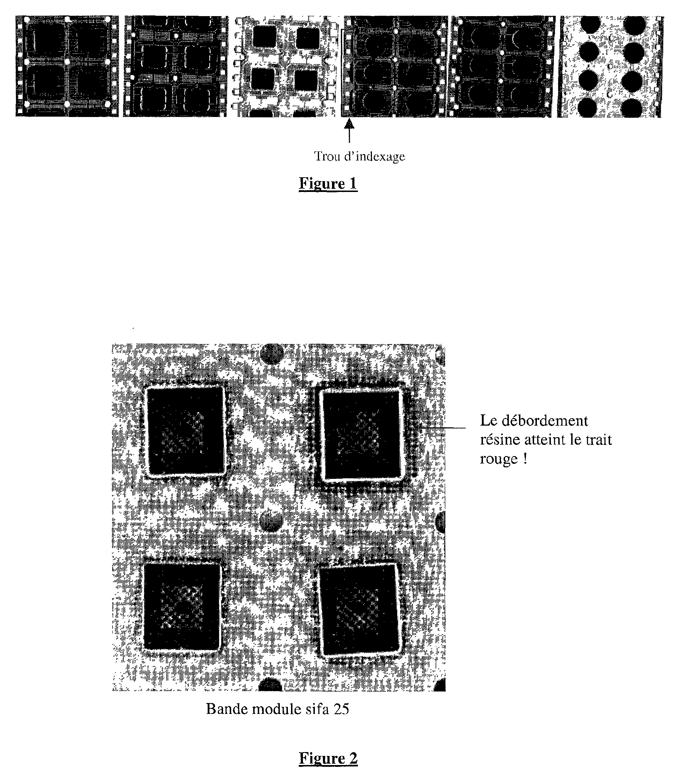

Le choix d'un éclairage pour ce type d'application est rendu difficile de part la diversité des produits (voir Figure 1. représentant une partie des bandes modules).

Les problématiques pour la détection sont :
- la diversité des bandes modules : différence de couleur, différence d'aspect (mat ou brillant)
- les deux types de pastilles (Cuivre ou Epoxy)
- la présence d'un léger relief sur le module lié à l'enrobage
- la précision dans la détection du module qui se fait à partir des trous d'indexage
- la précision dans l'estimation du débordement de résine

L'éclairage choisi doit être efficace dans l'ensemble des configurations existantes, mais doit également l'être pour une nouvelle bande dont on ne connaît pas l'aspect.

### Solution proposée :

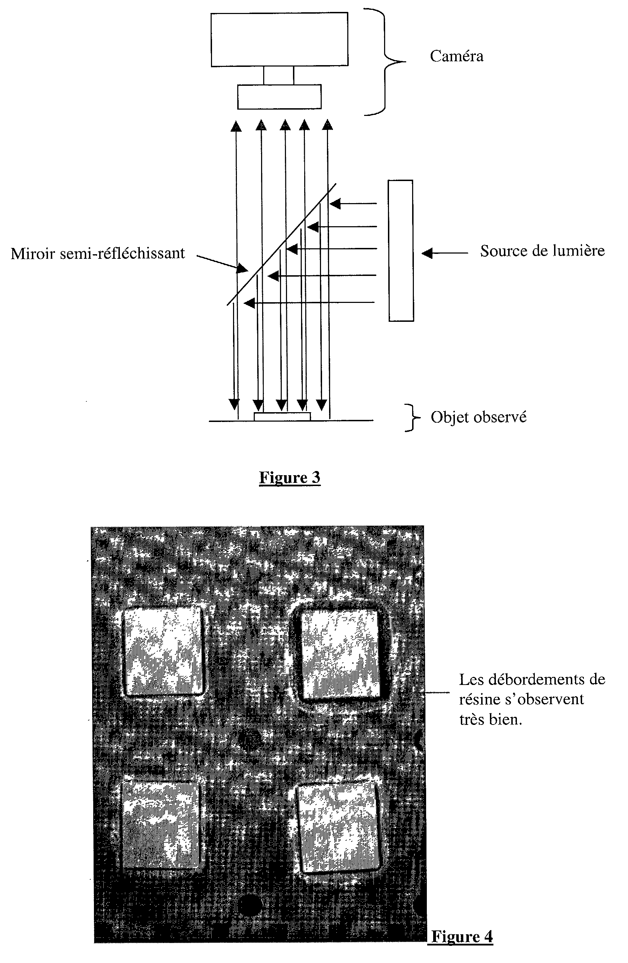

Pour observer correctement l'enrobage, il est important d'éclairer le module dans tous les sens. Les éclairages annulaires assurent cette fonction mais les réflexions parasites rendent l'image difficile à analyser (voir figure 2.)

Il faut donc s'orienter vers un éclairage dont les rayons lumineux sont dans le même sens (voir Figure 3.) de manière à diminuer le phénomène des réflexions.

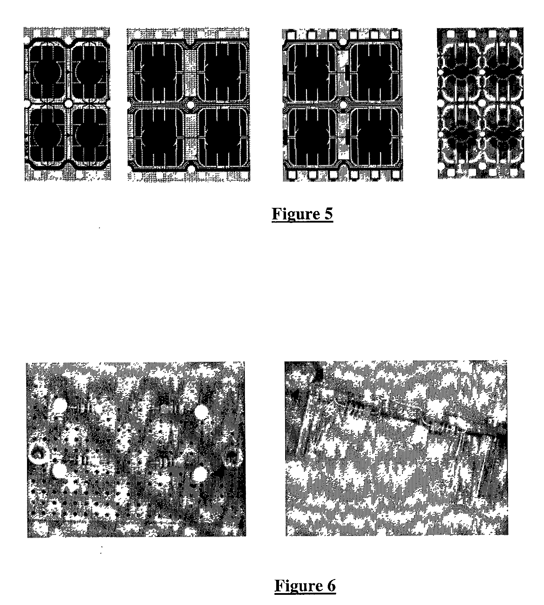

Ce type d'éclairage est couramment appelé ACIS.
La même bande prise avec ce type d'éclairage donne le résultat représenté sur la figure 4.

Les éclairages ACIS sont parfois peu puissants, et ne suffisent pas toujours à mettre en valeur les trous d'indexage. Il est donc avantageux d'ajouter un éclairage par le dessous qui pourra les mettre en évidence.
Plusieurs choix se présente à nous :
- les backlight (éclairage plat éclairant de manière uniforme )
- les fluorescents

Avec un éclairage de type Backlight nous obtenons les résultats représentés sur la figure 5.

L'éclairage par le dessous fait ressortir les trous d'indexages mais rend difficilement observable les débordements de résine. Une solution consiste à éclairer par le dessous uniquement les trous d'indexage et ce, en utilisant par exemple des LEDs. Les LEDs présentent en outre l'avantage d'être peu coûteuses.

Choix de la couleur des LED : les prises d'images se font à partir d'une caméra couleur JAI M7. Cette caméra est plus précise sur le plan vert, les LED peuvent donc être vertes ou blanches. Les LEDs sont de préférence supérieure à 300 mCd. Un exemple de dispositif d'éclairage à LED est illustré sur la figure 6.

### Résultat :

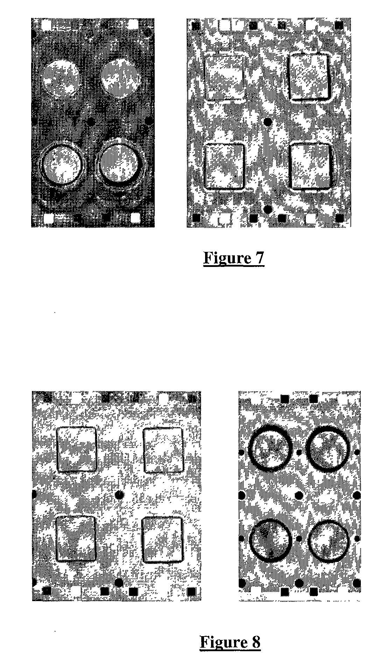

La combinaison des deux types d'éclairage donne les images représentées sur les figures 7 et 8.

La description ci-dessus illustre les caractéristiques suivantes :

Méthode d'éclairage pour capturer et traiter des images d'une scène comprenant un support partiellement opaque, le support comprenant une première face sur laquelle sont disposés des éléments opaques et une deuxième face, les images étant capturées au moyen d'un dispositif de capture d'images comprenant un axe optique, la méthode étant caractérisée en ce que:
- la première face reçoit des rayons lumineux sensiblement perpendiculaire au plan de la scène ; et en ce que
- le dispositif de capture d'images reçoit des rayons lumineux qui sont sensiblement parallèle à l'axe optique.

La description mentionne l'utilisation de LEDs pour éclairer par le dessous les trous d'indexations. D'autres sources d'éclairage équivalentes permettant d'éclairer localement les trous d'indexage peuvent être aussi utilisées. Des sources d 'éclairage éclairant non seulement les trous d'indexations mais aussi leur proche voisinage peuvent être aussi utilisées, l'essentiel étant de ne pas éclairer le voisinage des éléments opaques. Par exemple, dans le cas des bandes de modules mentionnées dans la description, des tubes fluorescent peuvent être placés sous la bande, au niveau de chaque côté comprenant les trous d'indexage. Il possible aussi d'éclairer uniformément l'arrière de la bande de modules avec un backlight à condition d'utiliser un masque opaque pour cacher le centre de la bande de modules.

L'invention s'applique non seulement à une bande de modules mais aussi à tout support partiellement opaque comprenant des éléments opaques.

## Revendications

1. Méthode d'éclairage pour capturer et traiter des images d'une scène comprenant un support partiellement opaque, le support comprenant une première face sur laquelle sont disposés des éléments opaques et une deuxième face, les images étant capturées au moyen d'un dispositif de capture d'images comprenant un axe optique, la méthode étant **caractérisée en ce que**:
- la première face reçoit des rayons lumineux sensiblement perpendiculaire au plan de la scène ; et **en ce que**
- le dispositif de capture d'images reçoit des rayons lumineux qui sont sensiblement parallèle à l'axe optique.

2. Méthode selon la revendication 1, **caractérisée en ce que** le support partiellement opaque est muni en outre, de part et d'autre des éléments opaques, de trous traversant et **en ce qu'**il est éclairé par la deuxième face essentiellement au niveau des trous traversant.

3. Méthode selon la revendication 1, **caractérisée en ce que** les éléments opaques sont des circuits intégrés recouverts de résine.

4. Méthode selon la revendication 1, **caractérisée en ce que** le support partiellement opaque est éclairé uniquement au niveau des trous traversant par la deuxième face au moyen de LEDs.

5. Méthode selon la revendication 1, **caractérisée en ce que** la première face est éclairée par un éclairage de type ACIS.
